# FASCICULE DE BREVET EUROPEEN

(11) **EP 1 020 019 B1**
(45) Date de publication et mention de la délivrance du brevet: **29.05.2002**
(21) Numéro de dépôt: 98944947.5
(22) Date de dépôt: 02.10.1998
(51) Int. Cl.: H02P 6/18

(54) **PROCEDE ET DISPOSITIF DE COMMANDE D'UN MOTEUR SYNCHRONE A AIMANT PERMANENT**
GERÄT UND VERFAHREN ZUR STEUERUNG EINES SYNCHRONMOTORS MIT PERMANENTMAGNET
METHOD AND DEVICE FOR CONTROLLING A SYNCHRONOUS MOTOR WITH PERMANENT MAGNET

(30) Priorité: 06.10.1997 FR 9712575
(43) Date de publication de la demande: 19.07.2000
(73) Titulaire: Micro-Beam S.A.R.L., 2000 Neuchâtel (CH)
(72) Inventeur: CARDOLETTI, Laurent, CH-1847 Rennaz (CH); PERRIARD, Yves, CH-2000 Neuchâtel (CH)
(74) Mandataire: Gresset, Jean
(86) Numéro de dépôt international: CH9800421
(87) Numéro de publication internationale: WO9918654

(56) Documents cités:
- EP-A- 0 735 662
- EP-B- 0 449 687
- WO-A-90/10973
- US-A- 5 245 256

## Description

La présente invention concerne un procédé de commande d'un moteur synchrone à aimant permanent, sans capteur direct, comportant au moins une phase, un enroulement et un rotor.

L'invention concerne également un dispositif de commande d'un moteur synchrone à aimant permanent, sans capteur direct, comportant au moins une phase, ce dispositif étant alimenté par une source d'énergie électrique.

Les moteurs synchrones à aimant permanent, tels que les moteurs pas-à-pas, les moteurs hybrides ou les moteurs à courant continu sans collecteur, sont actuellement bien connus et utilisés en remplacement des moteurs à courant continu avec collecteur, ceux-ci ayant une durée de vie relativement faible à cause des frottements générés sur le collecteur par les charbons.

Dans ces moteurs à aimant permanent, une électronique de commutation des phases est nécessaire pour remplacer la fonction du collecteur. Puisque ce type de moteur est synchrone, la vitesse du rotor est la même que celle du champ tournant statorique. En supprimant le collecteur et en le remplaçant par une électronique, la logique de commande doit connaître la position du rotor pour pouvoir réaliser la commutation au bon moment. Ceci est habituellement réalisé à l'aide de sondes à effet Hall ou d'un capteur optique, appelé capteur direct.

La présence de ce type de capteurs entraîne différents inconvénients. Tout d'abord, leur coût a une répercussion non négligeable sur le coût du moteur. De plus, leur mise en place implique qu'un certain volume doit être prévu non seulement pour les capteurs eux-mêmes, mais également pour le passage de fils électriques de connexion. Ils compliquent donc le montage et augmentent sa durée. Enfin, la fiabilité du système s'en trouve amoindrie.

La présente invention se propose de pallier ces inconvénients en supprimant les capteurs directs et en utilisant les informations données par le moteur pour réaliser la commutation des phases. Chaque moteur possédant un bobinage monophasé ou polyphasé au stator crée une tension induite due au mouvement des aimants rotoriques. Les passages par zéro de cette tension induite de la phase non-alimentée permettent de connaître avec précision la position du rotor et ainsi d'asservir le moteur en vitesse et/ou en couple.

Cette caractéristique a été utilisée notamment dans deux inventions décrites dans le brevet européen publié sous le No. EP-B-0 449 687 et dans la demande de brevet européen publiée sous le No. EP-A-0 735 662.

Le brevet européen No. EP-B-0 449 687 décrit un procédé de commande d'un moteur à courant continu sans collecteur. Plus particulièrement, ce procédé est uniquement applicable à un moteur triphasé bipolaire. Dans ce procédé, l'alimentation des enroulements du moteur est commandée par un onduleur, la conduction et l'extinction de cette alimentation étant commandées en modulation de largeur d'impulsion à fréquence fixe. La position du rotor est déterminée par la détection du passage par zéro de la force électromotrice induite dans l'enroulement non alimenté du moteur. Afin d'éliminer l'effet des perturbations qui génèrent des "faux" passages par zéro de la force électromagnétique induite, le signal prélevé aux cornes de l'enroulement non alimenté est échantillonné de façon synchronisée avec la fréquence de modulation de l'onduleur.

Un tel procédé présente différents inconvénients. Tout d'abord, il ne s'applique qu'à des moteurs triphasés et de plus bipolaires. Il ne peut pas être transposé à d'autres types de moteurs, ce qui limite son champ d'application possible. De plus, l'utilisation d'une fréquence fixe comme fréquence d'échantillonnage ne donne pas un rendement optimal. Enfin, un délai est créé entre la détection d'un passage par zéro et la commutation de l'alimentation. Ce délai est fixe, ce qui génère un bruit.

La demande de brevet européen publiée sous le No. EP-A-0 735 662 décrit un circuit et un procédé pour alimenter un moteur à courant continu polyphasé sans collecteur. L'invention décrite dans ce document a pour but principal de diminuer les perturbations générées par la modulation de largeur d'impulsion. Comme dans le cas précédent, un délai de commutation fixe est utilisé, ce qui génère un bruit.

Par ailleurs, un tel procédé ne peut s'appliquer qu'à des moteurs polyphasés bipolaires et utilise toujours la modulation de largeur d'impulsion.

La présente invention se propose de pallier ces inconvénients et de réaliser un procédé et un dispositif de commande d'un moteur synchrone à aimant permanent utilisé en mode moteur ou générateur, ce moteur pouvant être monophasé ou polyphasé, unipolaire ou bipolaire, et pouvant être commandé avec ou sans modulation de largeur d'impulsion.

Ce but est atteint par un procédé tel que défini en préambule et caractérisé en ce qu'il comporte les opérations de:
- contrôle de l'alimentation de chaque phase du moteur,
- mesure simultanée de la tension de chaque phase du moteur,
- détermination d'une fréquence variable à partir de la vitesse de rotation du rotor et de la charge du moteur,
- échantillonnage à cette fréquence variable de signaux de sortie provenant de la mesure de la tension de chaque phase, et
- commande de l'alimentation des phases en fonction des signaux échantillonnés.

L'enroulement du moteur peut être alimenté de façon unidirectionnelle ou bidirectionnelle.

De préférence, la position et la vitesse du rotor du moteur sont déterminée à partir de la tension de chaque phase du moteur.

Selon une forme de réalisation, la vitesse de rotation du rotor est déterminée en introduisant la tension d'au moins une phase du moteur dans un comparateur et en mesurant l'intervalle de temps qui sépare deux changements de signes des signaux sortant du comparateur.

Avantageusement, la vitesse de rotation du rotor du moteur est déterminée en calculant la somme des carrés des tensions de chaque phase et en extrayant la racine carrée de cette somme.

De préférence, l'alimentation du moteur est commutée en fonction du nombre de phases du moteur, du type d'alimentation des phases, du type de moteur et de son mode de fonctionnement.

Selon une forme de réalisation préférée, en fonction de la position du rotor du moteur, un seul type de commutation est autorisé.

Lorsque le temps séparant deux actions successives du contrôle de l'alimentation de chaque phase du moteur dépasse une valeur de seuil prédéfinie, la fréquence variable utilisée pour échantillonner des signaux de sortie provenant de la mesure de la tension de chaque phase est, de préférence, fixée à une valeur prédéterminée supérieure à la fréquence de rotation maximale du rotor du moteur.

Selon un mode de réalisation préféré, on détermine de façon répétée la vitesse de rotation réelle du rotor du moteur, on compare cette vitesse de rotation réelle à une vitesse de seuil prédéfinie, on contrôle l'alimentation de chaque phase du moteur en coupant momentanément l'alimentation de chaque phase lorsque la vitesse réelle est inférieure à la vitesse de seuil, et on contrôle l'alimentation de chaque phase du moteur en mesurant la tension induite par le mouvement du rotor sur une phase non alimentée, lorsque la vitesse de rotation réelle est supérieure à la vitesse de seuil.

Le but de l'invention est également atteint par un dispositif mettant en oeuvre le procédé ci-dessus et caractérisé en ce qu'il comporte un pont de puissance alimentant l'enroulement du moteur, une unité de commande de l'alimentation de l'enroulement, un circuit de mesure de la tension de chaque phase du moteur et des moyens pour échantillonner, à fréquence variable, des signaux provenant de ce circuit de mesure.

Le dispositif selon l'invention comporte avantageusement une unité de commande agencée pour commander la commutation de l'alimentation de chaque phase du moteur, cette unité de commande comportant au moins un programme de commande dépendant du type de moteur, du nombre de phases, du type d'alimentation des phases et du mode de fonctionnement du moteur.

Le dispositif comporte, de préférence, un comparateur par phase, agencé pour mesurer le signe de la tension de chaque phase.

Selon une forme de réalisation préférée, la tension de chaque phase est introduite dans l'unité de commande sous forme de signaux analogiques.

La présente invention et ses avantages apparaîtront mieux en référence à la description d'un mode de réalisation et aux dessins annexés dans lesquels :
- la figure 1 est un schéma-bloc illustrant le dispositif de commande selon la présente invention;
- la figure 2 montre un premier mode de réalisation d'une partie du dispositif selon la présente invention;
- la figure 3 montre un deuxième mode de réalisation d'une partie du dispositif de la figure 2;
- la figure 4 représente sous forme de schéma-bloc le procédé de commutation en mode haute vitesse;
- la figure 5 représente sous forme de schéma-bloc le procédé de commutation en mode basse vitesse; et
- la figure 6 est un schéma-bloc illustrant le fonctionnement du moteur depuis son démarrage jusqu'à ce qu'il ait atteint la vitesse voulue.

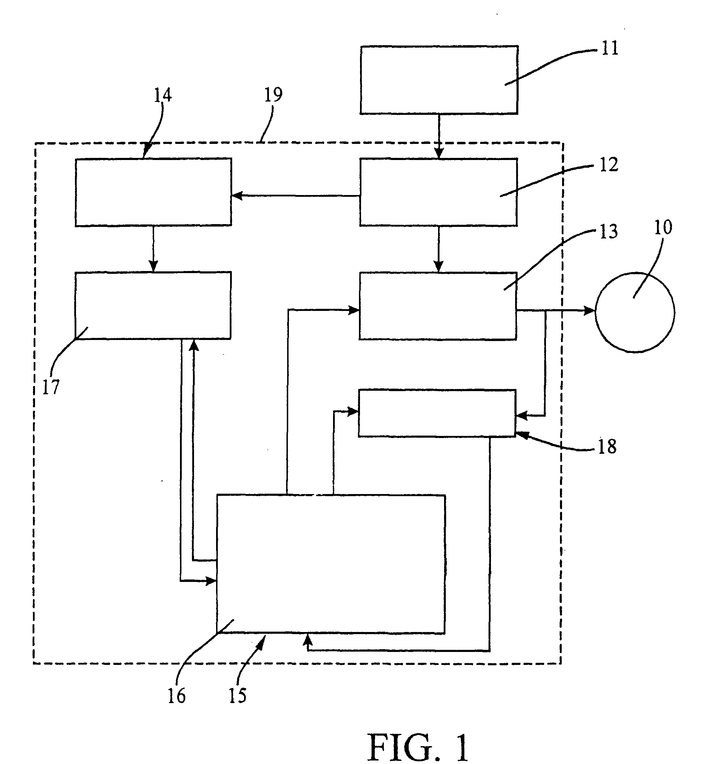

En référence aux figures 1 à 3, le dispositif selon la présente invention est utilisé pour alimenter un moteur synchrone à aimant permanent 10 tel que, par exemple, un moteur triphasé, et comporte une source d'alimentation électrique 11, un convertisseur 12, un pont de puissance 13 permettant d'alimenter le moteur, un circuit de mesure 14 du courant total des phases du moteur, une unité de commande 15 formée d'un microprocesseur 16, des moyens de comparaison 17 permettant de comparer une valeur instantanée du courant total du moteur à une valeur de consigne, et des moyens de détection 18 permettant de déterminer la position réelle du rotor du moteur en fonction de la tension induite due au déplacement du rotor du moteur.

La source d'alimentation électrique 11 peut être une source de courant alternatif ou continu. Le courant est, d'une part, fourni au pont de puissance 13 et, d'autre part, à une carte électronique 19 sur laquelle sont placés tous les composants ci-dessus, à l'exception du moteur 10 et de la source d'alimentation électrique 11. Avant d'être transmis à la carte électronique, ce courant est transformé par le convertisseur 12 en courant continu ayant une tension logique donnée.

Le pont de puissance 13 est destiné à alimenter chaque phase du moteur et permet ainsi, avec l'unité de commande 15, de contrôler l'enclenchement et le déclenchement de l'alimentation de chaque phase.

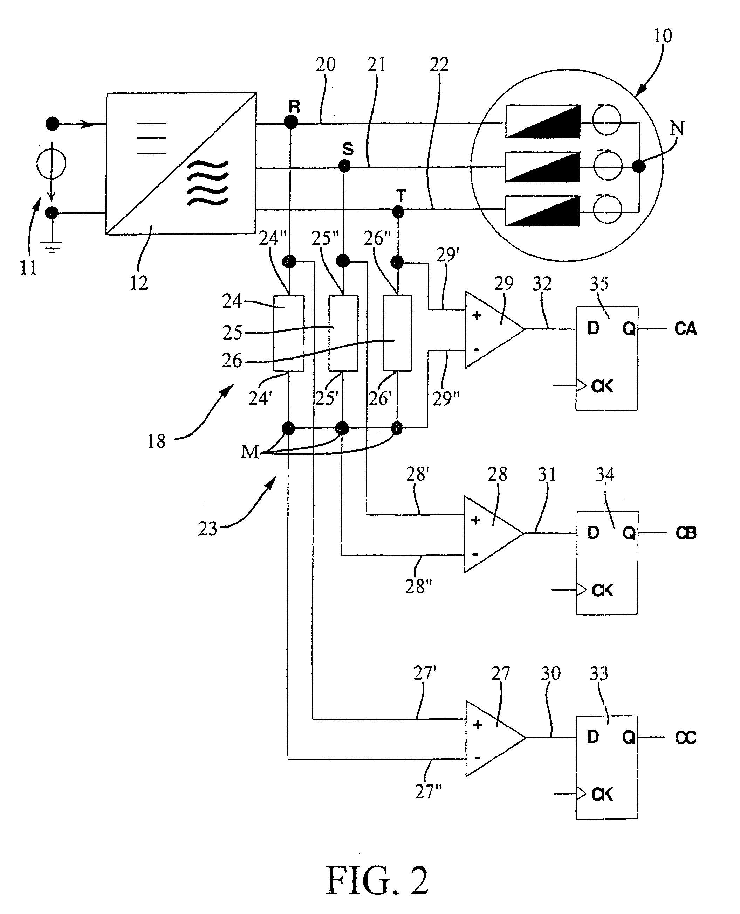

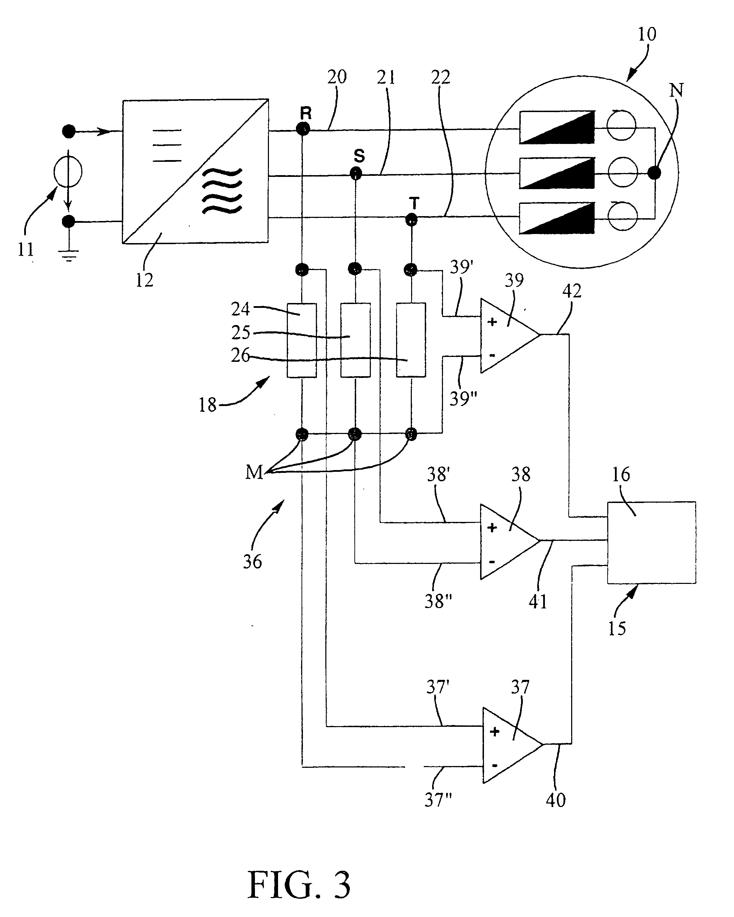

Deux modes de réalisation des moyens de détection 18 de la position du rotor du moteur sont illustrés en détail par les figures 2 et 3.

La figure 2 représente un premier mode de réalisation de ces moyens de détection 18, utilisés en particulier en mode haute vitesse, c'est-à-dire lorsque la vitesse de rotation du rotor du moteur est supérieure à environ 10 % de sa vitesse de rotation maximale.

Dans le mode de réalisation représenté, le moteur 10 comporte trois phases, respectivement 20, 21 et 22. Chaque phase est directement alimentée par le courant provenant du pont de puissance 13. Si le moteur a un point neutre N accessible, la tension de chaque phase peut être mesurée directement entre le neutre et la phase. Toutefois, généralement le neutre n'est pas accessible. Dans ce cas, un circuit de mesure de tension 23 est mis en place. Ce circuit comporte des résistances 24, 25 et 26 de grande valeur ohmique ayant des bornes 24', 25' et 26' reliées entre elles et des bornes 24", 25" et 26" reliées respectivement aux phases 20, 21 et 22 du moteur.

Dans le cas illustré par la figure 2, le moteur étant triphasé, le circuit de mesure de tension 23 comporte trois résistances reliées à un point commun M. Ce circuit de mesure de tension comporte trois comparateurs 27, 28 et 29 ayant chacun deux entrées, respectivement 27'-27", 28'-28", 29'-29", et une sortie 30, 31 et 32. L'une des entrées 27", 28" et 29" de chaque comparateur est reliée au point M, et l'autre entrée de chaque comparateur est reliée à l'une des phases 20, 21 et 22. Chaque comparateur délivre ainsi un signal de sortie représentatif du signe de la tension de chaque phase.

Afin d'éviter les perturbations, chaque signal sortant des comparateurs 27, 28 et 29 est mis en mémoire au moyen d'une bascule bistable 33, 34 et 35. Les bascules bistables sont commandées selon une fréquence d'échantillonnage variant en fonction de la vitesse de rotation et de la charge du moteur, comme cela sera expliqué plus en détail ci-dessous. Chaque bascule bistable génère un signal de sortie CA, CB, CC qui est transmis à l'unité de commande 15.

Dans le cas où le moteur est utilisé à basse vitesse, c'est-à-dire lorsque la vitesse de rotation réelle du moteur est inférieure à environ 10 % de sa vitesse maximale, la tension induite par la rotation du rotor du moteur devient très faible. L'amplitude des signaux mesurés aux bornes des résistances 24, 25 et 26 est faible et les comparateurs font trop d'erreurs pour que ces signaux soient utilisables.

La figure 3 illustre un exemple de circuit de mesure de tension 36 utilisable lorsque le moteur tourne à basse vitesse. En fait, comparativement au circuit de la figure 2, ce circuit de mesure ne comporte pas de bascules bistables et les comparateurs sont remplacés par des amplificateurs opérationnels 37, 38 et 39. Chaque amplificateur comporte deux entrées 37'-37", 38'-38", 39'-39" et une sortie 40, 41 et 42 et est connecté de la même façon que les comparateurs du circuit 23 de la figure 2. Les signaux de sortie de ces amplificateurs opérationnels ne sont donc plus seulement représentatifs du signe de la tension sur chaque phase, mais également de son amplitude. Ces signaux sont transmis directement à l'unité de commande 15 dans laquelle ils sont traités. L'unité de commande lit les signaux des amplificateurs opérationnels en les échantillonnant à très basse fréquence.

Afin de permettre une mesure précise de la tension induite par le mouvement du rotor du moteur en mode basse vitesse, on coupe momentanément l'alimentation de toutes les phases. Pendant cette coupure, la tension induite est mesurée, ce qui permet de déduire la vitesse et la position du rotor. L'alimentation est ensuite rétablie.

En pratique, l'unité de commande 15 comporte avantageusement deux fois plus d'entrées que le moteur ne comporte de phases. Dans le cas illustré, comme le moteur comporte trois phases, l'unité de commande 15 comporte six entrées et le circuit de mesure de tension comporte trois comparateurs et trois amplificateurs. En mode haute vitesse, les signaux provenant des comparateurs 27, 28 et 29 sont utilisés par l'unité de commande pour déterminer la position du rotor. En mode basse vitesse, les signaux provenant des amplificateurs opérationnels 37, 38 et 39 sont utilisés. Les signaux provenant des comparateurs et des amplificateurs sont transmis en continu aux entrées de l'unité de commande. Celle-ci détermine, en fonction de la vitesse de rotation du moteur, les signaux qui vont être utilisés.

Il est clair que, lorsque le circuit comporte plus ou moins de trois phases, il doit être adapté en fonction de ce nombre de phases.

Il est à noter que le circuit tel qu'illustré par la figure 2 peut également être utilisé en mode basse vitesse. Dans ce cas, les amplificateurs opérationnels ne sont pas nécessaires et l'unité de commande peut comporter des entrées numériques uniquement.

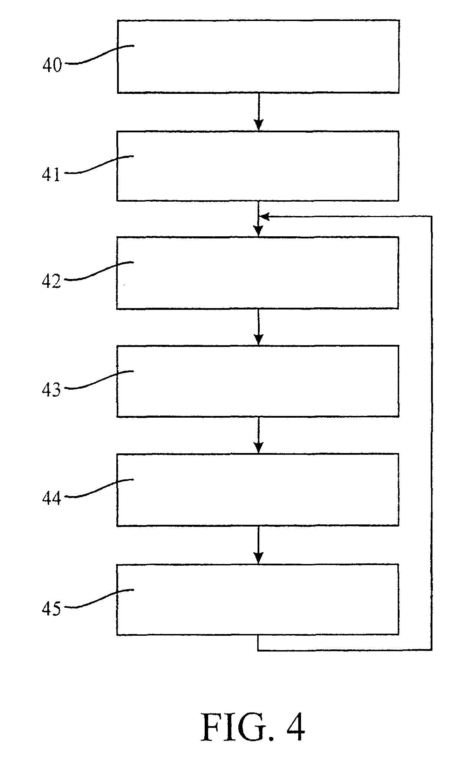

Le principe de fonctionnement en mode haute vitesse sans utiliser de modulation de largeur d'impulsion est décrit ci-dessous en référence aux figures 2 et 4.

Le procédé de commutation est basé sur le principe des interruptions. En effet, le microprocesseur 16 est équipé d'entrées, appelées "interruptions", qui déclenchent un processus programmé. En fait, le microprocesseur contient plusieurs programmes. La première étape 40 du procédé consiste à choisir, parmi tous les programmes disponibles, le programme adéquat. Celui-ci dépend du mode de fonctionnement moteur ou générateur, du nombre de phases, du sens de rotation et du type d'alimentation uni- ou bipolaire du moteur.

La deuxième étape 41 du procédé consiste à lire les signaux CC, CB, CA sortant des bascules bistables 33, 34 et 35. En fonction du programme utilisé, du dernier signal CA, CB ou CC ayant changé d'état et du sens de ce changement d'état, le microprocesseur détermine, dans une étape 42, qu'elle est la prochaine interruption autorisée.

Un délai d'attente, entre le moment où le passage par zéro de la tension induite est détecté et celui où l'alimentation des phases est commutée, est introduit. Ce délai est variable en fonction de la vitesse de rotation du rotor. Cette opération correspond à l'étape 43.

Lorsque le signal lié à la prochaine interruption autorisée se produit, le processus programmé est effectivement réalisé. Ceci correspond à l'étape 44.

La vitesse du rotor du moteur est calculée dans l'étape 45. La manière de calculer cette vitesse sera décrite en détail ci-dessous.

Le programme retourne enfin à l'étape 42 qui permet de déterminer la prochaine interruption autorisée.

Dans le cas d'un moteur triphasé bipolaire, pour un sens de rotation donné, les trois signaux CA, CB et CC sont reliés à trois interruptions I1, I2 et I3 du microprocesseur. Comme dans le cas d'un capteur direct, tel que des sondes à effet Hall, on réalise les étapes suivantes :
1. Sur le flanc montant de CA, on fait l'interruption I1.
2. Sur le flanc descendant de CC, on fait l'interruption I3.
3. Sur le flanc montant de CB, on fait l'interruption I2.
4. Sur le flanc descendant de CA, on fait l'interruption I1.
5. Sur le flanc montant de CC, on fait l'interruption I3.
6. Sur le flanc descendant de CB, on fait l'interruption I2.
7. Retour au point 1.

1. L'interruption I1 est activée au flanc montant de CA. La commutation des phases est alors réalisée pendant l'interruption et l'interférence possible de CC, due à l'extinction du courant dans la phase 22 et à l'inversion de la tension de phase 22, est empêchée. A la fin de cette opération, on autorise l'interruption I3 à être activée dès l'apparition du flanc descendant de CC.
2. L'interruption I3 est activée au flanc descendant de CC. La commutation des phases est réalisée durant cette interruption et les interférences possibles dues à CB sont empêchées. A la fin de cette opération, on autorise l'interruption I2 à être activée dès l'apparition du flanc montant de CB.
3. L'interruption I2 est activée au flanc montant de CB. La commutation des phases est réalisée durant cette interruption et les interférences possibles dues à CA sont empêchées. A la fin de cette opération on autorise l'interruption I1 à être activée dès l'apparition du flanc descendant de CA.
4. L'interruption I1 est activée au flanc descendant de CA. La commutation des phases est réalisée durant cette interruption et les interférences possibles dues à CC sont empêchées. A la fin de cette opération on autorise l'interruption I3 à être activée dès l'apparition du flanc montant de CC.
5. L'interruption I2 est activée au flanc montant de CC. La commutation des phases est réalisée durant cette interruption et les interférences possibles dues à CB sont empêchées. A la fin de cette opération on autorise l'interruption I2 à être activée dès l'apparition du flanc descendant de CB.
6. L'interruption I1 est activée au flanc descendant de CB. La commutation des phases est réalisée durant cette interruption et les interférences possibles dues à CA sont empêchées. A la fin de cette opération on autorise l'interruption I1 à être activée dès l'apparition du flanc montant de CA.

Grâce à ce procédé, seule une interruption est autorisée. Les passages par zéro dus à la conduction de diodes du pont de puissance ne perturbent donc pas la commutation.

En utilisant une modulation de largeur d'impulsion, à chaque extinction du signal de modulation, des interférences se créent. L'effet de ces interférences est supprimé de la façon suivante. Le signal de sortie de chacune des bascules bistables 33, 34 et 35 illustrées par la figure 2 est égal au signal provenant de la mesure de la tension aux bornes des résistances 24, 25 et 26 lorsqu'un signal d'horloge parvient à la bascule. La création de ce signal d'horloge au bon moment permet d'éliminer les perturbations dues aux arrêts du signal de modulation.

A chaque enclenchement du pont de puissance 13, un signal est transmis à une bascule monostable (non représentée). La durée pendant laquelle cette bascule donne un signal haut est réglée de façon conventionnelle au moyen d'un filtre RC. Le signal d'horloge transmis aux bascules bistables est donné par chaque flanc descendant du signal provenant de la bascule monostable. La fréquence d'échantillonnage, donnée par la fréquence du signal d'horloge transmis aux bascules bistables, est égale à la fréquence de la modulation de largeur d'impulsion qui est variable en fonction de la vitesse de rotation et de la charge du moteur.

En mode haute vitesse et basse vitesse, si la durée entre deux enclenchements successifs du pont de puissance augmente de façon trop importante, la fréquence d'échantillonnage devient trop basse et la position du rotor du moteur ne peut plus être détectée de façon fiable. Dans ce cas, une fréquence externe est utilisée pour inhiber le signal d'horloge des bascules monostables. Cette fréquence externe est plus grande que la fréquence de rotation maximale du moteur. Elle est généralement au moins cinq fois plus grande que cette fréquence de rotation maximale et, dans l'exemple décrit, elle peut être égale à 100 Khz. Cette fréquence est déterminée de façon empirique.

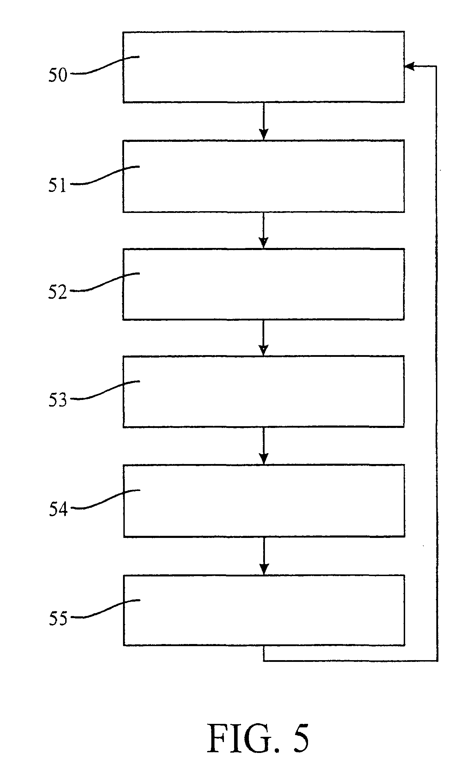

Le principe de fonctionnement en mode basse vitesse est expliqué ci-dessous en référence à la figure 5.

L'alimentation du pont de puissance est déclenchée, ce qui implique que, dans l'étape 50, aucune phase n'est alimentée. Dans l'étape 51 du procédé, un temps d'attente variable est introduit de façon à ce que les courants de phases s'annulent. L'unité de commande mesure les tensions induites par le mouvement du rotor sur chacune des phases. Ceci est mesuré dans l'étape 52 du procédé. A l'aide de ces tensions induites, on calcule la vitesse et la position du rotor. La manière de calculer la vitesse du rotor est expliquée ci-dessous. Ces calculs sont effectués dans l'étape 53 du procédé. En fonction de ces valeurs, on effectue la commutation et on réenclenche le pont de puissance pour alimenter les phases voulues. Ceci correspond à l'étape 54 du procédé. Enfin, dans l'étape 55, on impose un temps d'attente variable dépendant de la vitesse de rotation du rotor du moteur, entre la fin de la mesure de la vitesse et le moment auquel l'alimentation est commutée.

Lorsque les signaux numériques provenant des bascules bistables 33, 34 et 35 sont utilisés, on mesure le temps qui s'écoule entre l'apparition de deux flancs. Il est possible de détecter des flancs sur n'importe lesquels des signaux CA, CB ou CC, de sorte que l'on peut mesurer le temps entre l'apparition de deux flancs sur un même signal ou sur deux signaux différents. Ce temps permet de déterminer le temps nécessaire au rotor pour effectuer une période électrique et, par conséquent, la vitesse de rotation du rotor du moteur. Ceci correspond à l'étape 44 du procédé illustré par la figure 4.

Lorsque l'on utilise les signaux analogiques sortant des amplificateurs opérationnels 37, 38, 39 pour mesurer la vitesse de rotation du moteur, on calcule la somme des carrés des tensions sur chaque phase et l'on extrait la racine carrée de cette somme. Ceci donne l'amplitude de la tension, qui est directement proportionnelle à la vitesse de rotation du moteur. Il est ainsi possible de connaître la vitesse de rotation du rotor du moteur en mode basse vitesse. Ceci correspond à l'étape 53 du procédé illustré par la figure 5. Il est à noter que ce mode de calcul est utilisable en particulier lorsque le moteur comporte deux ou trois phases. Dans d'autres modes de réalisations, la vitesse de rotation du moteur peut être calculée en utilisant d'autres fonctions mathématiques.

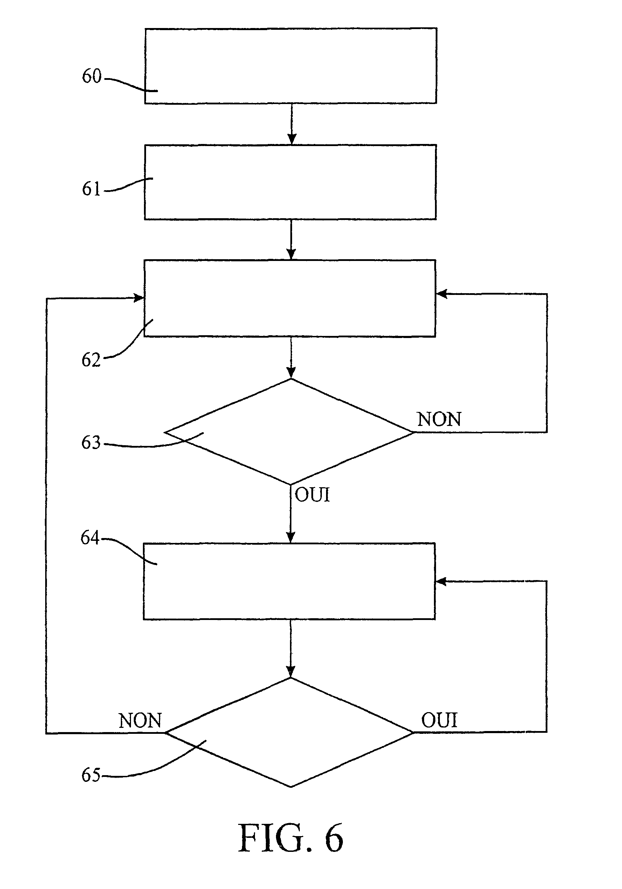

Le procédé de commande selon la présente invention est expliqué ci-dessous en référence à la figure 6.

Lorsque l'on enclenche le moteur, un courant de consigne est introduit dans l'unité de commande 15. Ce courant de consigne permet, d'une part, de fixer le couple généré par le moteur et, d'autre part, de protéger le moteur contre une valeur de courant qui pourrait l'endommager. Le rotor du moteur est ensuite positionné de telle façon qu'il ne soit pas placé dans une position instable. Ceci est fait dans une étape 60 du procédé illustré par la figure 6. En pratique, au moins l'une des phases du moteur est alimentée de façon à positionner le rotor correctement. Le moteur est alors mis en marche dans une étape 61 du procédé jusqu'à ce que la tension induite par le mouvement du rotor soit suffisante pour être détectée.

A la fin de cette phase de mise en marche, le moteur est commandé en mode basse vitesse, comme cela a été décrit ci-dessus. Cette étape correspond à une étape 62 du procédé. Dans une étape 63 du procédé, la vitesse de rotation du moteur est mesurée et comparée à une vitesse de seuil, correspondant à la frontière entre le mode basse vitesse et le mode haute vitesse. Ce seuil est généralement proche de 10 % de la vitesse de rotation maximale du moteur. Dès que la vitesse de rotation réelle du moteur a dépassé la valeur de seuil, le moteur est commandé en mode haute vitesse, comme décrit ci-dessus. Ceci correspond à une étape 64 du procédé. Dans le cas contraire, il est commandé en mode basse vitesse.

La mesure de la vitesse de rotation du rotor est régulièrement comparée à la vitesse de seuil dans une étape 65 du procédé. Si la vitesse du rotor est inférieure à la vitesse de seuil, le moteur est commandé en mode basse vitesse. Dans le cas contraire, il est commandé en mode haute vitesse.

La commande du moteur en mode haute vitesse ou basse vitesse peut être réalisée avec ou sans modulation de largeur d'impulsion.

Le procédé et le dispositif de régulation selon la présente invention permettent une régulation de moteurs mono- ou polyphasés, uni- ou multipolaires, avec ou sans modulation de régulation d'amplitude, sans utiliser de capteurs directs, en mode moteur ou générateur.

En outre, en utilisant une modulation de la largeur d'impulsion à fréquence variable, on obtient un meilleur rendement de l'entraînement électrique.

La présente invention n'est pas limitée aux modes de réalisations décrits, mais s'étend à toutes variantes évidentes pour l'homme du métier dans le cadre des revendications. En particulier, le type de moteur utilisable est varié. Il est possible d'introduire des valeurs de consigne différentes telles que le couple, la vitesse, le courant ou la tension.

## Revendications

1. Procédé de commande d'un moteur synchrone à aimant permanent sans capteur direct comportant au moins une phase, un enroulement et un rotor, **caractérisé en ce qu'**il comporte les opérations de:
- contrôle de l'alimentation de chaque phase du moteur,
- mesure simultanée de la tension de chaque phase du moteur,
- détermination d'une fréquence variable à partir de la vitesse de rotation du rotor et de la charge du moteur,
- échantillonnage à ladite fréquence variable de signaux de sortie provenant de la mesure de la tension de chaque phase, et
- commande de l'alimentation des phases en fonction des signaux échantillonnés.

2. Procédé selon la revendication 1, **caractérisé en ce que** ledit enroulement est alimenté de façon unidirectionnelle.

3. Procédé selon la revendication 1, **caractérisé en ce que** ledit enroulement est alimenté de façon bidirectionnelle.

4. Procédé selon l'une des revendications précédentes, **caractérisé en ce qu'**il comporte l'opération de détermination de la position et de la vitesse du rotor à partir de la tension de chaque phase du moteur.

5. Procédé selon la revendication 4, **caractérisé en ce que** la vitesse de rotation du rotor est déterminée en introduisant la tension d'au moins une phase du moteur dans un comparateur (33, 34, 35) et en mesurant l'intervalle de temps qui sépare deux changements de signes des signaux sortant dudit comparateur.

6. Procédé selon la revendication 4, **caractérisé en ce que** la vitesse de rotation du rotor est déterminée en calculant la somme des carrés des tensions de chaque phase et en extrayant la racine carrée de cette somme.

7. Procédé selon l'une des revendications précédentes, **caractérisé en ce que** l'alimentation du moteur est commutée en fonction du nombre de phases du moteur, du type d'alimentation des phases, du type de moteur et de son mode de fonctionnement.

8. Procédé selon la revendication 7, **caractérisé en ce que**, en fonction de la position du rotor, un seul type de commutation est autorisé.

9. Procédé selon l'une des revendications précédentes, **caractérisé en ce que**, lorsque le temps séparant deux actions successives du contrôle de l'alimentation de chaque phase du moteur dépasse une valeur de seuil prédéfinie, la fréquence variable d'échantillonnage est fixée à une valeur prédéterminée supérieure à la fréquence de rotation maximale du rotor.

10. Procédé selon l'une des revendications précédentes, **caractérisé en ce qu'**il comporte les opérations de:
- détermination de façon répétée de la vitesse de rotation réelle du rotor,
- comparaison de cette vitesse de rotation réelle à une vitesse de seuil prédéfinie,
- contrôle de l'alimentation de chaque phase du moteur en la coupant momentanément, lorsque la vitesse réelle est inférieure à la vitesse de seuil,
- contrôle de l'alimentation de chaque phase du moteur en mesurant la tension induite par le mouvement du rotor sur une phase non alimentée, lorsque la vitesse réelle est supérieure à la vitesse de seuil.

11. Dispositif de commande d'un moteur synchrone à aimant permanent, mettant en oeuvre le procédé selon l'une des revendications précédentes, ce dispositif étant alimenté par une source d'alimentation électrique, **caractérisé en ce qu'**il comporte un pont de puissance (13) alimentant l'enroulement du moteur, une unité de commande de l'alimentation de l'enroulement, un circuit de mesure de la tension de chaque phase du moteur et des moyens pour échantillonner à fréquence variable des signaux provenant de ce circuit de mesure.

12. Dispositif selon la revendication 11, **caractérisé en ce qu'**il comporte une unité de commande agencée pour commander la commutation de l'alimentation de chaque phase du moteur, et **en ce que** cette unité de commande comporte au moins un programme de commande dépendant du type de moteur, du nombre de phases, du type d'alimentation des phases et du mode de fonctionnement du moteur.

13. Dispositif selon la revendication 11, **caractérisé en ce qu'**il comporte un comparateur par phase agencé pour mesurer le signe de chaque phase.

14. Dispositif selon la revendication 11, **caractérisé en ce que** la tension de chaque phase est introduite dans l'unité de commande sous forme de signaux analogiques.

## Claims

1. Method for controlling a synchronous motor with a permanent magnet without a direct sensor including at least a phase, a coil and a rotor, **characterised in that** it includes the steps of:
- controlling the powering of each motor phase;
- simultaneously measuring the voltage of each motor phase;
- determining a variable frequency from the rotor rotational speed and the motor load;
- sampling at said variable frequency output signals from the voltage measurement of each phase; and
- controlling the powering of the phases as a function of the sampled signals.

2. Method according to claim 1, **characterised in that** said coil is powered in a unidirectional manner.

3. Method according to claim 1, **characterised in that** said coil is powered in a bi-directional manner.

4. Method according to any of the preceding claims, **characterised in that** it includes the step of determining the rotor position and speed from the voltage of each motor phase.

5. Method according to claim 4, **characterised in that** the rotor rotational speed is determined by introducing the voltage of at least one motor phase into a comparator (33, 34, 35) and by measuring the time interval which separates two sign changes in the signals from said comparator.

6. Method according to claim 4, **characterised in that** the rotor rotational speed is determined by calculating the sum of the squares of the voltages of each phase and by extracting the square root of this sum.

7. Method according to any of the preceding claims, **characterised in that** the powering of the motor is switched as a function of the number of motor phases, the phase powering type, the motor type and the operating mode thereof.

8. Method according to claim 7, **characterised in that**, as a function of the rotor position, only one type of switching is authorised.

9. Method according to any of the preceding claims, **characterised in that**, when the time separating two successive actions for controlling the powering of each motor phase exceeds a predefined threshold value, the variable sampling frequency is fixed at a predetermined value greater than the maximum rotational speed of the rotor.

10. Method according to any of the preceding claims, **characterised in that** it includes the steps of:
- repeatedly determining the real rotational speed of the rotor;
- comparing this real rotational speed to a predefined threshold value;
- controlling the powering of each motor phase by momentarily cutting it off when the real speed is less than the threshold speed;
- controlling the powering of each motor phase by measuring the voltage induced by the rotor movement over a non-powered phase, when the real speed is greater than the threshold speed.

11. Device for controlling a synchronous motor with a permanent magnet implementing the method according to any of the preceding claims, said device being powered by an electric power source, **characterised in that** it includes a power bridge (13) powering the motor coil, a unit for controlling the powering of the coil, a circuit for measuring the voltage of each motor phase and means for sampling, at a variable frequency, signals from said measuring circuit.

12. Device according to claim 11, **characterised in that** it includes a control unit arranged to control the switching of the powering of each motor phase, and **in that** this control unit includes at least one control programme depending on the motor type, the number of phases, the phase powering type and the motor operating mode.

13. Device according to claim 11, **characterised in that** it includes a phase comparator arranged for measuring the sign of each phase.

14. Device according to claim 11, **characterised in that** the voltage of each phase is introduced into the control unit in the form of analogue signals.

## Patentansprüche

1. Befehlssteuerung eines Synchronmotors mit Permanentmagnet ohne direkten Sensor mit mindestens einer Phase, einer Wicklung und einem Rotor mit folgenden Arbeitsschritten:
- Kontrolle der Speisung jeder Motorphase,
- gleichzeitige Messung der Spannung aller Motorphasen,
- Bestimmung einer variablen Frequenz ausgehend von der Rotationsgeschwindigkeit und der Motorlast,
- Punktweise Messung zur erwähnten variablen Frequenz von Ausgangssignalen aus der Spannungsmessung der Phasen, und
- Steuerung der Phasenspeisung in Abhängigkeit der entnommenen Signale.

2. Steuerung entsprechend der Anforderung aus 1, bei der die erwähnte Wicklung unidirektional gespeist wird.

3. Steuerung entsprechend der Anforderung aus 1, bei der die erwähnte Wicklung bidirektional gespeist wird.

4. Steuerung entsprechend einer der oben beschriebenen Anforderungen, bei der die Position und Geschwindigkeit des Rotors über die Spannung der einzelnen Motorphasen ermittelt wird.

5. Steuerung entsprechend der Anforderung aus 4, bei der die Geschwindigkeit der Rotorrotation durch Induktion der Spannung von mindestens einer Motorphase in einen Komparator (33, 34, 35) ermittelt wird und bei der die Zeitintervalle zwischen zwei Wechseln der Signalzeichen aus dem erwähnten Komparator gemessen werden.

6. Steuerung entsprechend der Anforderung aus 4, bei der die Geschwindigkeit der Rotorrotation über die Quadratwurzel der Summe der Quadrate der Spannung jeder Phase errechnet wird.

7. Steuerung entsprechend einer der obigen Anforderungen, bei der die Motorspeisung in Abhängigkeit der Anzahl der Motorphasen, des Speisungstyps der Phasen, des Motorentyps und seiner Funktionsweise umgeschaltet wird.

8. Steuerung entsprechend der Anforderung aus 7, bei der in Abhängigkeit der Rotorposition nur ein einziger Umschalttyp zulässig ist.

9. Steuerung entsprechend den obigen Anforderungen, bei der sobald der Zeitraum von zwei aufeinanderfolgenden Kontrollen der Speisung der einzelnen Motorphasen einen vorbestimmten Schwellenwert überschreitet, die variable Frequenz zur punktweisen Messung auf einen vorbestimmten Wert gesetzt wird, der größer ist als die maximale Rotationsfrequenz des Rotors.

10. Steuerung entsprechend einer der obigen Anforderungen mit folgenden Arbeitsschritten:
- wiederholte Festlegung der reellen Rotationsgeschwindigkeit des Rotors,
- Vergleich dieser reellen Rotationsgeschwindigkeit mit einem vorab bestimmten Geschwindigkeitswert,
- Kontrolle der Speisung jeder Motorphase, die dann unterbrochen wird, wenn die reelle Geschwindigkeit niedriger als der Schwellenwert ist,
- Kontrolle der Speisung jeder Motorphase, indem die Spannung gemessen wird, die durch die Rotorbewegung auf eine nicht gespeiste Phase ausgeübt wird, wenn die reelle Geschwindigkeit höher als der Schwellenwert ist.

11. Befehlssteuerung eines Synchronmotors mit Permanentmagnet entsprechend einer der obigen Anforderungen. Diese wird von einer elektrischen Quelle gespeist und enthält eine Leistungsbrücke (13) zur Speisung der Motorenwicklung, eine Befehlseinheit zur Speisung der Wicklung, einen Messkreislauf zur Spannungsmessung der einzelnen Motorphasen und Vorrichtungen, um unter variabler Frequenz die Signale aus dem Messkreislauf zu prüfen.

12. Vorrichtung entsprechend den Anforderungen aus 11, mit einer Befehlseinheit, die so eingerichtet ist, dass die Umwandlung der Speisung der einzelnen Motorphasen gesteuert wird. Sie enthält mindestens ein Befehlsprogramm, das vom Motorentyp, der Phasenanzahl, der Speisungsart der Phasen und der Funktionsweise des Motors abhängt.

13. Vorrichtung entsprechend den Anforderungen aus 11 mit einem Komparator pro Phase, der das Zeichen jeder Phase misst.

14. Vorrichtung entsprechend den Anforderungen aus 11, bei der die Spannung aus jeder Phase in Form von analogen Zeichen in die Befehlseinheit eingeführt wird.
